(19) Europäisches Patentamt
European Patent Office
Office européen des brevets

(11) EP 2 330 137 B1

(12) # EUROPÄISCHE PATENTSCHRIFT

(45) Veröffentlichungstag und Bekanntmachung des Hinweises auf die Patenterteilung:
**26.06.2013 Patentblatt 2013/26**

(51) Int Cl.:
***C08F 28/02*** *(2006.01)* ***B01J 45/00*** *(2006.01)*

(21) Anmeldenummer: **09178036.1**

(22) Anmeldetag: **04.12.2009**

(54) **Methylenaminoethylsulfonsäure-Chelatharze**

Methylenaminoethylsulfonic acids-chelate resins

Résines de chélate d'acide méthylène-amino-éthyl-sulfonique

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**08.06.2011 Patentblatt 2011/23**

(73) Patentinhaber: **LANXESS Deutschland GmbH**
**51369 Leverkusen (DE)**

(72) Erfinder:
- **Schelhaas, Michael**
  **50733, Köln (DE)**
- **Vanhoorne, Pierre**
  **40789, Monheim (DE)**
- **Klipper, Reinhold**
  **50933, Köln (DE)**
- **Martin, Georg**
  **40764, Langenfeld (DE)**

(56) Entgegenhaltungen:
**WO-A1-2007/088010 WO-A1-2008/098244**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 330 137 B1

**Beschreibung**

Die vorliegende Erfindung betrifft Chelatharze enthaltend Methylenaminoethylsulfonsäuregruppen, ein Verfahren zu deren Herstellung sowie deren Anwendung zur Entfernung von Schwermetallen aus Flüssigkeiten, bevorzugt Prozesswässern in oder aus der Elektronikindustrie, der Galvanikindustrie und der Minenindustrie.

Seit längerer Zeit werden Ionenaustauscher zur Entfernung von Wertmetallen und Schwermetallen, bevorzugt von Zinn, Cobalt, Nickel, Kupfer, Zink, Blei, Uran, Wismuth, Vanadium, Elemente der Platingruppe bevorzugt Ruthenium, Osmium, Iridium, Rhodium, Palladium, Platin sowie von Edelmetallen, bevorzugt von Gold und Silber insbesondere aus wässrigen Lösungen eingesetzt. Zu diesem Zweck werden bevorzugt neben Kationen- oder Anionenaustauschern auch Chelatharze eingesetzt.

Der Einsatz von Chelatharzen zur Entfernung von Schwer- oder Wertmetallen ist dem Fachmann bekannt und wird beispielsweise in R. Hering, Chelatbildende Ionentauscher, Akademie Verlag, Berlin, 1967, Seiten 150 bis 157 beschrieben. Genannt werden u.a. Chelatharze mit Iminodiessigsäuregruppen (IDE-Gruppen).

In EP-A 1078690 werden zur selektiven Aufnahme von Schwermetallen Chelatharze mit Imninodiessigsäure-Gruppen oder mit Aminomethylphosphonsäure-Gruppen nach dem so genannten Phthalimidverfahren hergestellt. Gemäß US-A 4,444.961 können Chelatharze mit Imninodiessigsäure-Gruppen auch nach dem Chlormethylierungsverfahren hergestellt werden. In US-A 4,098,867 und US-A 4,031,038 werden Chelatharze beschrieben, die Methylaminopyridingruppen tragen.

Chelatharze zeigen in vielen Fällen eine deutlich höhere Selektivität für Schwermetalle als beispielsweise Kationenaustauscher mit stark sauren Sulfonsäuregruppen.

Die gebräuchlichen Chelatharze nehmen Schwermetalle aus wässrigen Lösungen bei pH > 4 auf. Bei pH Werten kleiner ca. 4 nimmt die Selektivität von gebräuchlichen Chelatharzen für Schwermetalle ab, da ihre funktionellen Gruppen protoniert werden.

In vielen Verfahren zur Gewinnung von Schwermetallen aus Metallerzen werden Gesteine mit Schwefelsäure behandelt. Die Wertmetalle werden aus dem Gestein gelöst und liegen in der starksauren Gesteins-Schwefelsäuresuspension vor. Die Entfernung von Schwermetallen aus Lösungen oder Suspensionen mit stark sauren pH Werten im Bereich von etwa 4 bis etwa 0 ist daher von erheblichem technischen Interesse.

Gesucht sind Ionenaustauscher, die aus sauren Lösungen oder Suspensionen im pH Wertbereich von 4 bis etwa 0 Wertmetalle selektiv aufnehmen können.

Die meisten Metallerzen enthalten nicht nur eines, sondern eine Vielzahl an Wertmetalle in unterschiedlichen Konzentrationen. Wegen der großen Vielfalt an Metallerzen und der damit verbundenen großen Vielfalt der Wertmetallzusammensetzungen ist es wünschenswert, über viele Ionenaustauschertypen mit unterschiedlichen Selektivitäten zu verfügen, um das gewünschte Wertmetall möglichst selektiv aus dem Wertmetallgemisch des Erzes zu extrahieren.

Bisher sind aber nur eine handvoll Chelatharze kommerziell verfügbar, die alle eine intrinsische, durch ihre funktionelle Gruppe vorgegebene, Selektivität aufweisen.

Es werden daher weitere Chelatharze mit neuen funktionellen Gruppen gesucht, die im großtechnischen Maßstab darstellbar sind.

Aufgabe der vorliegenden Erfindung war daher die Bereitstellung eines hochfunktionalisierten, hochkapazitiven auch bei niedrigen pH Werten stabilen Chelatharzes mit neuer funktioneller Gruppe, das Wertmetalle aus sauren wässrigen Lösungen effektiv adsorbiert.

Es wurde jetzt überraschend gefunden, dass solche Harze durch die Umsetzung von aminomethylierten Perlpolymerisaten mit Vinylsulfonsäure dargestellt werden können.

Die Lösung der Aufgabe und somit Gegenstand der vorliegenden Erfindung sind Chelatharze enthaltend Methylenaminoethylsulfonsäuregruppen der allgemeinen Formel (I),

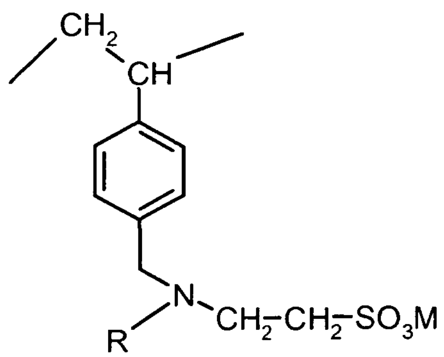

(I)

worin

R für einen Rest der Reihe —H, $-C_1$-$C_6$-Alkyl, $-CH_2$-COOM oder $-CH_2$-$CH_2$-$SO_3M$ steht und

M für H oder für ein metallisches Kation, bevorzugt für ein Kation der Alkali-Metall-Reihe, insbesondere für $Na^+$ oder $K^+$, steht.

Die vorliegende Erfindung betrifft aber auch ein Verfahren zur Herstellung von Chelatharzen enthaltend Methylenaminoethylsulfonsäuregruppen der allgemeinen Formel (I)

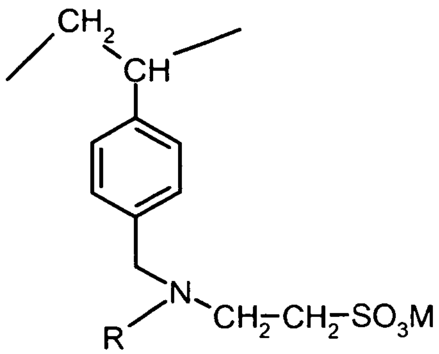

(I)

worin

R für einen Rest der Reihe —H, $-C_1$-$C_6$-Alkyl, $-CH_2$-COOM oder $-CH_2$-$CH_2$-$SO_3M$ steht und

M für H oder für ein metallisches Kation, bevorzugt für ein Kation der Alkali-Metall-Reihe, insbesondere für $Na^+$ oder $K^+$, steht,

dadurch gekennzeichnet, dass man

a) ein monoethylenisch ungesättigtes aromatisches Monomer und eine multiethylenisch ungesättigte Verbindung in Anwesenheit eines Porenbildners zu einem Perlpolymerisat polymerisiert,

b) das Perlpolymerisat zu einem aminomethylierten Perlpolymerisat umsetzt,

c) das aminomethylierte Perlpolymerisat neutral wäscht,

d) das aminomethylierte Perlpolymerisat mit Vinylsulfonsäure umsetzt und

e) nach der Umsetzung das erhaltene Chelatharz enthaltend Methylenaminoethylsulfonsäuregruppen mit entionisertem Wasser bei Temperaturen von 20 bis 120°C wäscht und durch Absetzen lassen oder Filtrieren isoliert.

Zur Herstellung der erfindungsgemäßen Chelatharze werden bevorzugt zunächst nichtfunktionalisierte Perlpolymerisate durch Suspensionspolymerisation nicht funktionalisierter Monomere erzeugt und diese in einem oder mehreren nachgeschalteten Schritt(en) mit der chelatisierenden Methylenaminoethylsulfonsäure-Struktur versehen.

Als nicht funktionalisierte Monomere werden bevorzugt monoethylenisch ungesättigte aromatische Monomere, besonders bevorzugt Styrol, α-Methylstyrol, Vinyltoluol, t-Butylstyrol oder Vinylnaphthalin eingesetzt. Gut geeignet sind auch Mischungen dieser Monomere sowie Mischungen von monoethylenisch ungesättigten aromatischen Monomeren mit bis zu 20 Gew.-% anderer monoethylenisch ungesättigter Monomere, bevorzugt Chlorstyrol, Bromstyrol; Acrylnitril, Methacrylnitril, Ester der Acrylsäure oder Methacrylsäure, insbesondere bevorzugt Methylmethacrylat, Ethylmethacrylat, Methylacrylat, Ethylacrylat, Isopropylmethacrylat, Butylacrylat, Butylmethacrylat, Hexylmethacrylat, 2-Ethylhexylacrylat, Ethylhexylmethacrylat, Decylmethacrylat, Dodecylmethacrylat, Stearylmethacrylat, oder iso-Bornylmethacrylat; Ether und Ester des Vinylalkohols, bevorzugt Vinylacetat, Ethylvinylether, Propylvinylether, Butylvinylether, Butandiolmonovinylether, Ethylenglykolmonovinylether oder Diethylenglykolmonovinylether. Insbesondere bevorzugt werden Styrol

oder Vinyltoluol eingesetzt, insbesondere besonders bevorzugt Styrol.

Den Monomeren werden Vernetzer beigemischt. Bevorzugte Vernetzer sind multiethylenisch ungesättigte Verbindungen. Besonders bevorzugt sind Divinylbenzol, Divinyltoluol, Trivinylbenzol, Ethylenglykoldimethacrylat, Ethylenglykoldiacrylat, Ethylenglykoldivinylether, Diethylenglykoldivinylether, Butandioldivinylether, Octadien und Triallylcyanurat. Ganz besonders bevorzugt werden Divinylbenzol und Trivinylbenzol eingesetzt, insbesondere besonders bevorzugt Divinylbenzol. Die Vernetzer können alleine oder als Gemisch verschiedener Vernetzer eingesetzt werden. Die Gesamtmenge einzusetzender Vernetzer beträgt in der Regel 0,1 bis 80 Gew.-%, bevorzugt 0,5 bis 60 Gew.-%, besonders bevorzugt 1 bis 40 Gew.-%, bezogen auf die Summe der ethylenisch ungesättigten Verbindungen.

In einer bevorzugten Ausführung der vorliegenden Erfindung wird zur Erzeugung einer Porenstruktur im nicht funktionellen Perlpolymerisat wenigstens ein Porenbildner — ein so genanntes Porogen — den Monomeren zugesetzt. Als Porogene werden bevorzugt organische Verdünnungsmittel eingesetzt. Besonders bevorzugt werden solche organischen Verdünnungsmittel, die sich zu weniger als 10 Gew.-%, vorzugsweise weniger als 1 Gew.-% in Wasser lösen, eingesetzt. Insbesondere geeignete Porogene sind Toluol, Ethylbenzol, Xylol, Cyclohexan, Oktan, Isooktan, Decan, Dodekan, Isododekan, Methylisobutylketon, Ethylacetat, Butylacetat, Dibutylphtalat, n-Butanol, 4-Methyl-2-pentanol und n-Octanol. Ganz besonders bevorzugt sind Toluol, Cyclohexan, Isooktan, Isododekan, 4-Methyl-2-pentanol oder Methylisobutylketon.

Es können auch Gemische der oben genannten Porenbildner als Porogen eingesetzt werden.

Das Porogen wird, wenn zugesetzt, in Mengen von 10 bis 200 Gew.-%, bevorzugt 25 bis 150 Gew.- %, besonders bevorzugt 40 bis 100 Gew.-%, jeweils bezogen auf die Summe der ethylenisch ungesättigten Verbindungen, eingesetzt.

Bei der Herstellung der nicht funktionellen Perlpolymerisate werden die oben genannten Monomere in einer bevorzugten Ausführungsform der vorliegenden Erfindung in Anwesenheit eines Dispergierhilfsmittels unter Verwendung eines Initiators in wässriger Suspension polymerisiert.

Als Dispergierhilfsmittel werden bevorzugt natürliche oder synthetische wasserlösliche Polymere eingesetzt. Besonders bevorzugt werden Gelatine, Stärke, Polyvinylalkohol, Polyvinylpyrrolidon, Polyacrylsäure, Polymethacrylsäure oder Copolymerisate aus (Meth)acrylsäure oder (Meth)acrylsäureestern eingesetzt. Ganz besonders bevorzugt werden Gelatine oder Cellulosederivate, insbesondere Celluloseester oder Celluloseether, wie Carboxymethylcellulose, Methylcellulose, Hydroxyethylcellulose oder Methylhydroxyethylcellulose eingesetzt. Im Falle des Einsatzes beträgt die Einsatzmenge der Dispergierhilfsmittel im Allgemeinen 0.05 bis 1 %, vorzugsweise 0.1 bis 0.5 %, bezogen auf die Wasserphase.

In einer weiteren bevorzugten Ausführungsform der vorliegenden Erfindung werden Initiatoren eingesetzt. Geeignete Initiatoren sind Verbindungen, die bei Temperaturerhöhung freie Radikale bilden. Bevorzugt werden Peroxyverbindungen, besonders bevorzugt Dibenzoylperoxid, Dilaurylperoxid, Bis-(p-chlorbenzoyl)peroxid, Dicyclohexylperoxydicarbonat und tert.-Amylperoxy-2-ethylhexan sowie Azoverbindungen, besonders bevorzugt 2,2'-Azobis(isobutyronitril) oder 2,2'-Azobis(2-methylisobutyronitril) oder auch aliphatische Peroxyester, bevorzugt tert.-Butylperoxyacetat, tert.-Butylperoxyisobutyrat, tert.-Butylperoxypivalat, tert.-Butylperoxyoctoat, tert.-Butylperoxy-2-ethylhexanoat, tert.-Butylperoxyneodecanoat, tert.-Amylperoxypivalat, tert.-Amylperoxyoctoat, tert.-Amylperoxy-2-ethylhexanoat, tert.-Amylperoxyneodecanoat, 2,5-Bis(2-ethylhexanoylperoxy)-2,5-dimethylhexan, 2,5-Dipivaloyl-2,5-dimethylhexan, 2,5-Bis(2-neo-decanoylperoxy)-2,5-dimethylhexan, Di-tert.-butylperoxyazelat un d D i-tert.-amylperoxyazelat eingesetzt.

Im Falle des Einsatzes von Initiatoren werden diese in Mengen von 0,05 bis 6,0 Gew.-%, vorzugsweise 0,1 bis 5,0 Gew.-%, besonders bevorzugt 0,2 bis 2 Gew.-%, bezogen auf die Summe der ethylenisch ungesättigten Verbindungen, angewendet.

In einer weiteren bevorzugten Ausführungsform kann die Wasserphase ein Puffersystem enthalten, welches den pH-Wert der Wasserphase auf einen Wert zwischen 12 und 3, vorzugsweise zwischen 10 und 4 einstellt. Besonders gut geeignete Puffersysteme enthalten Phosphatsalze, Acetatsalze, Citratsalze oder Boratsalze.

In einer weiteren bevorzugten Ausführungsform kann es vorteilhaft sein, einen in der wässrigen Phase gelösten Inhibitor einzusetzen. Als Inhibitoren kommen sowohl anorganische als auch organische Stoffe in Frage. Bevorzugte anorganische Inhibitoren sind Stickstoffverbindungen, besonders bevorzugt Hydroxylamin, Hydrazin, Natriumnitrit und Kaliumnitrit. Bevorzugte organische Inhibitoren sind phenolische Verbindungen, besonders bevorzugt Hydrochinon, Hydrochinonmonomethylether, Resorcin, Brenzkatechin, tert.-Butylbrenzkatechin oder Kondensationsprodukte aus Phenolen mit Aldehyden. Weitere bevorzugte organische Inhibitoren sind stickstoffhaltige Verbindungen, besonders bevorzugt Diethylhydroxylamin oder Isopropylhydroxylamin. Resorcin wird als Inhibitor insbesondere bevorzugt. Die Konzentration des Inhibitors beträgt 5 — 1000 ppm, vorzugsweise 10 — 500 ppm, besonders bevorzugt 20 - 250 ppm, bezogen auf die wässrige Phase.

Die organische Phase kann als Tröpfchen durch Rühren (zur Herstellung heterodisperser Ionenaustauscher mit heterodisperser Teilchengrößenverteilung) bzw. durch Verdüsung oder Jetting (zur Herstellung monodisperser Ionenaustauscher mit monodisperser Teilchengrößenverteilung) in die wässrige Phase dispergiert werden. Unter organischer Phase wird die Mischung aus Monomer(en), Vernetzer(n), Porogen(en) und gegebenenfalls Initiator(en) verstanden. Bei der klassischen Dispersionspolymerisation werden die organischen Tröpfchen durch Verrühren erzeugt. Im 4

Liter Maßstab werden typischerweise Rührerdrehzahlen von 250 bis 400 UpM verwendet. Werden die Tröpfchen durch Verdüsung erzeugt, empfiehlt es sich, zur Erhaltung des einheitlichen Tröpfchendurchmessers die organischen Tröpfchen zu verkapseln. Verfahren zur Mikroverkapselung von verdüsten organischen Tröpfchen werden beispielsweise in EP-A 0 046 535 beschrieben, deren Inhalt in Bezug auf die Mikroverkapselung von der vorliegenden Anmeldung mit umfasst wird.

EP-A 0 046 535 betrifft ein Verfahren zur Herstellung von (monodispersen) Perlpolymerisaten einheitlicher Teilchengröße und einheitlicher Qualität, das dadurch gekennzeichnet ist, dass man

i) aus dem zu polymerisierenden Monomer bzw. Polymerisationsgemisch durch Eindüsen in eine mit dem Monomer bzw. Polymerisationsgemisch im Wesentlichen nicht mischbare, kontinuierlich zugeführte Flüssigkeit Tröpfchen einheitlicher Größe erzeugt;

ii) diese Tröpfchen einheitlicher Größe in besagter Flüssigkeit kontinuierlich nach bekannten Verfahren der Mikroverkapselung entweder unmittelbar mit einer unter den anzuwendenden Polymerisationsbedingungen stabilen Hülle oder zunächst mit einer gegenüber Scherkräften stabilen Hülle verkapselt und diese gegenüber Scherkräften stabile Hülle in einem zweiten Teilschritt kontinuierlich oder diskontinuierlich zu einer unter den anzuwendenden Polymerisationsbedingungen stabilen Hülle härtet;

iii) die mit einer unter den anzuwendenden Polymerisationsbedingungen stabilen Hülle verkapselten Monomer- bzw. Polymerisationsgemisch-Tröpfchen anschließend polymerisiert, mit der Maßgabe,

α) dass man das Monomer bzw. das Polymerisationsgemisch im Gleichstrom zur kontinuierlich zugeführten kontinuierlichen Phase in diese eindüst;

ß) dass man die Erzeugung der Tröpfchen und deren Verkapselung in verschiedenen Bereichen des Reaktionsgefäßes vornimmt;

γ) dass man die Verfahrensschritte α) und β) in der Weise ausführt, dass auf die Tröpfchen von ihrer Erzeugung bis zu ihrer Verkapselung keine die Integrität der Tröpfchen verändernden Kräfte einwirken.

Die Verkapselung mit einer unter den anzuwendenden Polymerisationsbedingungen stabilen Hülle wird dann in zwei Teilschritten ausgeführt, wenn die nach den Verfahren der Mikroverkapselung um die Tröpfchen erzeugten Hüllen zwar gegen Scherkräfte, nicht aber unter den anzuwendenden Polymerisationsbedingungen stabil sind.

In diesem Fall müssen die Hüllen in einem zweiten Verfahrensschritt, der kontinuierlich oder diskontinuierlich ausgeführt werden kann, zu unter den Polymerisationsbedingungen stabilen Hüllen gehärtet werden. Der Härtungsschritt kann in einem gesonderten Arbeitsgang in einem getrennten Reaktionsgefäß durchgeführt werden; vorzugsweise wird er jedoch im gleichen Reaktionsgefäß vorgenommen.

Sind die nach dem Verfahren der Mikroverkapselung um die Tröpfchen erzeugten Hüllen dagegen bereits unter den anzuwendenden Polymerisationsbedingungen stabil, so entfällt der Härtungsschritt, und die Verkapselung mit den unter den anzuwendenden Polymerisationsbedingungen stabilen Hüllen wird in einem Schritt ausgeführt.

Als gegenüber Scherkräften stabil werden im Rahmen des Verfahrens nach EP-A 0 046 535 Hüllen dann bezeichnet, wenn sie, ohne dass sie beschädigt werden, Rührbewegungen einer Intensität aushalten, wie sie unter den Bedingungen gebräuchlicher Suspensionspolymerisationen angewendet werden, um Tröpfchen gleicher Größe herzustellen.

Durch die Kombination von Erzeugung von Monomer- bzw. Polymerisationsgemisch-Tröpfchen einheitlicher Größe, Stabilisierung dieser Tröpfchen durch Verkapselung und Polymerisation der mit einer unter den Polymerisationsbedingungen stabilen Hülle verkapselten Tröpfchen und dies unter Einhaltung bestimmter Bedingungen werden gemäß EP-A 0 046 535 Perlpolymerisate erhalten, deren Perlen sich durch annähernd gleiche Teilchengröße und durch Einheitlichkeit in ihren physikalischen Eigenschaften wie Kornstabilität, Bruchfestigkeit usw. auszeichnen.

Das Verhältnis der organischen Phase zur wässrigen Phase beträgt in der Regel 1:20 bis 1:0,6, bevorzugt 1: 10 bis 1:1, besonders bevorzugt 1:5 bis 1:1,2.

Die organische Phase kann aber auch im so genannten Seed-Feed-Verfahren (Saat-Zulauf-Verfahren) zu einer Suspension von Saatpolymerisaten, die die organische Phase aufnehmen, zugegeben werden, gemäß EP-A 0 617 714 deren Lehre von der vorliegenden Anmeldung mit umfasst wird. Auch auf diese Weise lassen sich monodisperse Ionenaustauscher herstellen.

Gemäß EP-A 0 617 714 wird anfangs eine Anzahl gelartiger Copolymerimpfteilchen bereitgestellt. Die Impfteilchen werden hergestellt durch Polymerisation eines ersten Monomergemisches, umfassend mindestens ein erstes Monovinylidenmonomer und ein erstes quervernetzendes Monomer. Die Impfteilchen enthalten gegebenenfalls eine

Radikalquelle darin, welche fähig ist, die Polymerisation ethylenisch ungesättigter Monomere zu initiieren.

Danach werden die Impfteilchen mit einem zweiten Monomergemisch imbibiert, umfassend ein phasentrennendes Verdünnungsmittel, mindestens ein zweites Monovinylidenmonomer, ein zweites quervernetztendes Monomer und einen radikalischen Polymerisationsinitiator. Der radikalische Initiator ist fakultativ für Ausführungsformen, bei denen die Impfteilchen eine Radikalquelle enthalten. Das phasentrennende Verdünnungsmittel und das mindestens eine zweite Monomervinylidenmonomer werden so ausgewählt, dass sie einen Löslichkeitsparameter und ein Dipolmoment aufweisen, die mit dem Löslichkeitsparameter und dem Dipolmoment des mindestens einen ersten Monovinylidenmonomers kompatibel sind, so dass mindestens 70 Gew.-% des zweiten Monomergemisches von den Impfteilchen imbibiert werden.

Die imbibierten Impfcopolymerteilchen werden danach für einen ausreichenden Zeitraum unter Suspensionspolymerisationsbedingungen gehalten, um einen gewünschten Umsetzungsgrad von Monomer im Copolymer zu erreichen um die porösen Copolymerperlen zu erhalten.

Das Verhältnis der Summe organische Phase + Saatpolymerisat zur wässrigen Phase beträgt in der Regel 1: 20 bis 1:0,6, bevorzugt 1:10 bis 1:1, besonders bevorzugt 1:5 bis 1:1,2.

Die Polymerisation der Monomere im erfindungsgemäßen Verfahrensschritt a) wird bevorzugt bei erhöhter Temperatur durchgeführt. Die Polymerisationstemperatur richtet sich dabei nach der Zerfallstemperatur des gegebenenfalls in bevorzugter Ausführungsform einzusetzenden Initiators und liegt typischerweise im Bereich von 50 bis 150°C, vorzugsweise 60 bis 120°C. Die Polymerisationsdauer liegt bei 30 Minuten bis 24 Stunden, bevorzugt 2 bis 15 Stunden.

Am Ende der Polymerisation werden die nicht funktionalisierten Perlpolymerisate von der wässrigen Phase abgetrennt, beispielsweise auf einer Nutsche, und gegebenenfalls getrocknet.

Die mittlere Teilchengröße der Perlpolymerisate gemäß Verfahrensschritt a) im erfindungsgemäßen Verfahren beträgt 5-1200 μm, vorzugsweise 20 — 1000 μm, besonders bevorzugt 100 bis 1000 μm.

Im erfindungsgemäßen Verfahrensschritt b) kann die Funktionalisierung zu aminhaltigen Perlpolymerisaten durch verschiedene Verfahren erfolgen. So können die Perlpolymerisate durch Chlormethylierung und anschließender Umsetzung mit beispielsweise Hexamethylentetramin gemäß DD 79152 und IL 52121 zu aminhaltigen Perlpolymerisaten umgesetzt werden.

Ein bevorzugtes Verfahren zur Umsetzung nicht funktionalisierter polyvinylaromatischer Perlpolymerisate zu aminhaltigen Perlpolymerisaten im erfindungsgemäßen Verfahrensschritt b) ist das so genannte Phthalimidverfahren gemäß US-A 4 952 608, DAS 2 519 244 und EP-A 1 078 690, deren Lehren in Bezug auf das Phthalimidverfahren von der vorliegenden Anmeldung mit umfasst werden. Gegenstand der EP-A 1 078 690 ist zum Beispiel ein Verfahren zur Herstellung monodisperser Ionenaustauscher mit chelatisierenden, funktionellen Gruppen, dadurch gekennzeichnet, dass man

l) Monomertröpfchen aus mindestens einer monovinylaromatischen Verbindung und mindestens einer polyvinylaromatischen Verbindung sowie gegebenenfalls einem Porogen und/oder gegebenenfalls einem Initiator oder einer Initiatorkombination, zu einem monodispersen, vernetzten Perlpolymerisat umsetzt,

m) dieses monodisperse, vernetzte Perlpolymerisat mit Phthalimidderivaten amidomethyliert,

n) das amidomethylierte Perlpolymeristat zu aminomethyliertem Perlpolymerisat umsetzt und

o) das aminomethylierte Perlpolymerisat zu Ionenaustauschern mit chelatisierenden Gruppen reagieren lässt.

In einer bevorzugten Ausführungsform werden deshalb die nicht funktionalisierten polyvinylaromatischen Perlpolymerisate aus dem erfindungsgemäßen Verfahrensschritt a) mit Phthalimidderivaten kondensiert. Als Katalysator wird Oleum, Schwefelsäure oder Schwefeltrioxid eingesetzt.

Die Abspaltung des Phthalsäurerestes und damit die Freilegung der Aminomethylgruppe erfolgt durch Behandeln des phthalimidomethylierten, vernetzten Perlpolymerisates mit wässrigen oder alkoholischen Lösungen eines Alkalihydroxids, wie Natriumhydroxid oder Kaliumhydroxid bei Temperaturen zwischen 100 und 250°C, vorzugsweise 120 -190°C. Die Konzentration der Natronlauge liegt im Bereich von 10 bis 50 Gew.-%, vorzugsweise 20 bis 40 Gew.-%. Alternativ kann die Abspaltung des Phthalsäurerestes durch Behandeln des phthalimidomethylierten, vernetzten Perlpolymerisates mit Hydrazin oder hydrazinhaligen Lösungen erfolgen.

Dieses Verfahren ermöglicht die Herstellung Aminomethylgruppen-haltiger vernetzter Perlpolymerisate mit einer Substitution der aromatischen Kerne größer 1.

Das dabei entstehende aminomethylierte Perlpolymerisat wird im erfindungsgemäßen Verfahrensschritt c) mit entionisertem Wasser neutral gewaschen.

Die Umsetzung des aminomethylierten Perlpolymerisates zu einem Methylenaminoethylsulfonsäure-Struktur enthaltenden Chelatharz erfolgt im erfindungsgemäßen Verfahrensschritt d) durch Reaktion des neutral gewaschenen aminomethylierten Perlpolymerisates mit Vinylsulfonsäure oder einem Salz der Vinylsulfonsäure.

Bevorzugt werden Akalisalze der Vinylsulfonsäure, insbesondere bevorzugt das Natriumsalz.

Die Vinylsulfonsäure kann als reine Säure, als reines Salz oder als Gemisch von Säure und Salz, von Säure und verschiedenen Vinylsulfonsäure-Salzen oder von verschiedenen Vinylsulfonsäure-Salzen eingesetzt werden.

Im weiteren Verlauf wird vereinfachend von Vinylsulfonsäure gesprochen, was jedoch deren Salze mit umfasst. Zur Umsetzung des aminomethylierten Perlpolymerisates werden bevorzugt mindestens 0,5 mol Vinylsulfonsäure, bezogen auf 1 mol Amin im aminomethylierten Perlpolymerisat eingesetzt. Besonders bevorzugt wird ein Verhältnis von 0,8 bis 3 mol Vinylsulfonsäure pro mol Amin, ganz besonders bevorzugt 1,0 bis 2 mol Vinylsulfonsäure pro mol Amin verwendet.

Die Umsetzung erfolgt bevorzugt in Anwesenheit eines geeigneten Lösungsmittels. Geeignet sind Lösungsmittel, die das aminomethylierte Perlpolymerisat aufquellen und gleichzeitig die Vinylsulfonsäure ausreichend lösen. Bevorzugte Lösungsmittel sind Dimethylformamid, Dimethylsulfoxid, $C_1$-$C_3$ Alkohole und Wasser. Besonders bevorzugt ist Wasser. Es können auch Gemische der geeigneten Lösungsmittel eingesetzt werden.

Die Menge an eingesetztem Lösungsmittel ist für die Umsetzung nicht entscheidend. Sie wird im Allgemeinen so gewählt, dass der Ansatz während der gesamten Reaktionszeit rührbar bleibt. Mengen von 1,2 bis 5 ml Lösungsmittel per ml Harz haben sich als gut durchführbar erwiesen.

Die Temperatur, bei der die Umsetzung durchgeführt wird, liegt bevorzugt im Bereich zwischen Raumtemperatur und 150°C. Besonders bevorzugt werden Temperaturen zwischen 20 und 120°C, insbesondere bevorzugt zwischen 50 und 110°C, angewandt.

Die Reaktionszeit beträgt im Allgemeinen mehrere Stunden, bevorzugt zwischen 2 und 72 Stunden, besonders bevorzugt zwischen 4 und 48 Stunden.

Nach der Umsetzung wird das erhaltene methylenaminoethylgruppenhaltige Chelatharz im erfindungsgemäßen Verfahrensschritt e) mit entionisiertem Wasser bei Temperaturen von 20 bis 120°C, vorzugsweise von 20 bis 70°C gewaschen und schließlich durch Absetzen lassen oder Filtrieren isoliert.

In einer weiteren bevorzugten Ausführung der vorliegenden Erfindung wird das erhaltene methylenaminoethylgruppenhaltige Chelatharz aus Schritt e) durch weitere Umsetzung modifiziert, indem man:

f) das erhaltene Chelatharz aus Schritt e) mit einem Alkylierungsreagenz reagieren lässt und

g) mit entionisertem Wasser bei Temperaturen von 20 bis 120°C wäscht und durch Absetzen lassen oder Filtrieren isoliert

Als Alkylierungsreagenzienten im Schritt f) werden bevorzugt $C_1$-$C_{18}$ Alkylhalogeniden, besonders bevorzugt $C_1$-$C_6$ Alkylhalogeniden, ganz besonders bevorzugt Methylchlorid, Ethylchlorid, Methylbromid, Ethylbromid, n-Propylbromid, 2-Propylbromid, n-Butylbromid, Isobutylbromid, t-Butylbromid und Methyliodid, sowie funktionelle Alkylhalogenide, bevorzugt Chloressigsäure, Bromessigsäure, Chlorpropionsäure, Brompropionsäure, 2-Chloroethanol und 2-Bromoethanol, eingesetzt. Es können auch andere bekannten alkylierenden Verbindungen verwendet werden, bevorzugt Ethylenoxid, Ethylensulfid, Dimethylsulfat, Diethylsulfat und Dipropylsulfat.

Es werden im Schritt f) bevorzugt mindestens 0,5 mol Alkylierungsreagenz, bezogen auf 1 mol Amin im methylenaminoethylsulfonsäuregruppenhaltigen Perlpolymerisat, eingesetzt. Besonders bevorzugt wird ein Verhältnis von 0,8 bis 2 mol Alkylierungsreagenz pro mol Amin, ganz besonders bevorzugt 1,0 bis 1,5 mol Alkylierungsreagenz pro mol Amin verwendet.

Die Umsetzung erfolgt in Anwesenheit eines geeigneten Lösungsmittels. Geeignet sind Lösungsmittel, die das methylenaminoethylsulfonsäuregruppenhaltige Perlpolymerisat aufquellen und gleichzeitig das Alkylierungsreagenz ausreichend lösen. Bevorzugte Lösungsmittel sind Dimethylformamid, Dimethylsulfoxid, $C_1$-$C_3$ Alkohole und Wasser. Besonders bevorzugt sind $C_1$-$C_3$ Alkohole und Wasser. Es können auch Gemische der geeigneten Lösungsmittel eingesetzt werden. Die Menge an eingesetztem Lösungsmittel ist für die Umsetzung nicht entscheidend. Sie wird im Allgemeinen so gewählt, dass der Ansatz während der gesamten Reaktionszeit rührbar bleibt. Mengen von 1,2 bis 5 ml Lösungsmittel per ml Harz haben sich als gut durchführbar erwiesen.

Die Temperatur, bei der die Umsetzung durchgeführt wird, liegt bevorzugt im Bereich zwischen Raumtemperatur und 120°C. Besonders bevorzugt werden Temperaturen zwischen 20 und 100°C, insbesondere bevorzugt zwischen 50 und 80°C, angewandt.

Die Reaktionszeit beträgt im Allgemeinen mehrere Stunden, bevorzugt zwischen 2 und 72 Stunden, besonders bevorzugt zwischen 4 und 48 Stunden.

Nach der Umsetzung wird das erhaltene alkylierte methylenaminoethylgruppenhaltige Chelatharz im erfindungsgemäßen Verfahrensschritt g) mit entionisiertem Wasser bei Temperaturen von 20 bis 120°C, vorzugsweise von 20 bis 70°C gewaschen und schließlich durch Absetzen lassen oder Filtrieren isoliert.

Die erfindungsgemäßen, methylenaminoethylgruppenhaltigen Chelatharze aus Schritten e) oder g) weisen eine mittlere Teilchengröße D zwischen 100 μm und 1200 μm auf, bevorzugt zwischen 200 und 1000 μm. Zur Bestimmung

der mittleren Teilchengröße und der Teilchengrößenverteilung sind übliche Methoden, wie Siebanalyse oder Bildanalyse geeignet. Als mittlere Teilchengröße D wird im Sinne der vorliegenden Erfindung der 50%-Wert (∅6 (50)) der Volumenverteilung verstanden. Der 50%-Wert (∅ (50) der Volumenverteilung gibt den Durchmesser an, der von 50 Vol.-% der Teilchen unterschritten wird.

Erfindungsgemäß sind Chelatharze mit monodisperser Teilchengrößenverteilung bevorzugt. Monodisperse Teilchengrößenverteilungen im Sinne der vorliegenden Erfindung weisen einen Volumenanteil an Teilchen zwischen 0,9 D und 1,1 D von mindestens 75 Vol.-%, bevorzugt mindestens 85 Vol.-%, besonders bevorzugt mindestens 90 Vol.-% auf.

In einer bevorzugten Ausführungsform der vorliegenden Erfindung weisen die erfindungsgemäßen, methylenaminoethylgruppenhaltige Chelatharze eine makroporöse Struktur auf. Unter makroporöser Struktur wird im Sinne der vorliegenden Erfindung gemäß IUPAC (K. Horie et al., Pure and Applied Chemistry 2004, 76(4), 900) eine Struktur mit Poren verstanden, die einen mittleren Durchmesser größer als 50 nm aufweist. Bevorzugt weisen die erfindungsgemäßen, makroporösen, borselektiven Harze ein Gesamtporenvolumen, gemessen am getrockneten Harz mit der Methode der Quecksilberintrusionsporosimetrie, von mindestens 0,1 $cm^3$/g, besonders bevorzugt mindestens 0,5 $cm^3$/g auf. Durch Umsetzung des aminomethylierten Perlpolymerisats mit Vinylsulfonsäure sowie darauf folgende Alkylierung entstehen im Perlpolymerisat Methylenaminoethylsulfonsäurestrukturen der allgemeinen Formel (I):

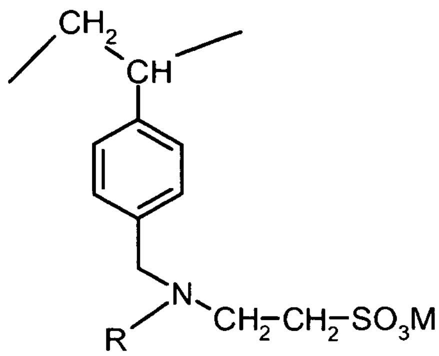

(I)

worin

R für —H, -$C_1$-$C_6$-Alkyl, -$CH_2$-COOM oder —$CH_2$-$CH_2$-$SO_3$M steht und

M für H oder für einen metallischen Kation, bevorzugt für einen Kation der Alkali-Metall- Reihe, insbesondere für $Na^+$ oder $K^+$, steht.

Gegenstand der vorliegenden Erfindung sind deshalb auch methylenaminoethylgruppenhaltige Chelatharze auf Basis mindestens eines aromatischen Monomers, die Methylenaminoethylgruppen gemäß Formel (I) enthalten und einen mittleren Teilchendurchmesser D zwischen 100 und 1200 μm aufweisen.

Überraschenderweise gelingt es mit dem erfindungsgemäßen Chelatharzen Schwermetalle und Wertmetalle bei pH-Werten < 4 wirkungsvoll aus wässrigen Lösungen zu isolieren.

Die vorliegende Erfindung betrifft deshalb die Verwendung der erfindungsgemäßen Chelatharze zur Entfernung von Schwermetallen aus wässrigen Lösungen mit einem pH-Wert < 4, bevorzugt einen pH-Wert von 0 bis 4.

Schwermetalle und Wertmetalle im Sinne der vorliegenden Erfindung wurden eingangs definiert. Entsprechende wässrige Lösungen sind bevorzugt Prozesswässer in oder aus der Elektronikindustrie, der Galvanikindustrie oder der Minenindustrie.

Zur Klarstellung sei angemerkt, dass im Rahmen der vorliegenden Erfindung alle aufgeführten, allgemeinen oder in Vorzugsbereichen genannten Definitionen und Parameter in beliebigen Kombinationen umfasst sind.

Entionisiertes Wasser im Sinne der vorliegenden Erfindung ist gekennzeichnet, indem es eine Leitfähigkeit von 0,1 bis 10 μS besitzt, wobei der Gehalt an gelösten oder ungelösten Metallionen nicht größer als 1 ppm, bevorzugt nicht größer als 0,5 ppm für Fe, Co, Ni, Mo, Cr, Cu, als individuelle Komponenten ist und nicht größer als 10 ppm, bevorzugt nicht größer als 1 ppm für die Summe der genannten Metalle.

**Beispiele**

**Beispiel 1: Herstellung eines monodispersen aminomethylierten Perlpolymerisates (erfindungsgemäß - Schritte a) bis c) )**

1a) Herstellung eines monodispersen, makroporösen Perlpolymerisates auf der Basis von Styrol , Divinylbenzol und Ethylstyrol

In einem 101 Glasreaktor wurden 3000 g entionisiertes Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Die Mischung wurde auf 25 °C temperiert. Unter Rühren wurde anschließend eine Mischung aus 3200 g durch Verdüsung (Jetting) gewonnenen, mikroverkapselten Monomertröpfchen mit enger Teilchengrössenverteilung aus 3,6 Gew.-% Divinylbenzol und 0,9 Gew.-% Ethylstyrol (eingesetzt als handelsübliches Isomerengemisch aus Divinylbenzol und Ethylstyrol mit 80 % Divinylbenzol), 0,5 Gew.-% Dibenzoylperoxid, 56,2 Gew.- % Styrol und 38,8 Gew.-% Isododekan (technisches Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure bestand, und 3200 g wässriger Phase mit einem pH-Wert von 12 zugesetzt. Die mittlere Teilchengröße der Monomertröpfchen betrug 460 μm.

Der Ansatz wurde unter Rühren durch Temperaturerhöhung nach einem Temperaturprogramm bei 25°C beginnend und bei 95°C endend auspolymerisiert. Der Ansatz wurde abgekühlt, über ein 32 μm-Sieb gewaschen und anschließend im Vakuum bei 80°C getrocknet. Man erhielt 1893 g eines kugelförmigen Polymerisates mit einer mittleren Teilchengröße von 440 μm, enger Teilchengrößenverteilung und glatter Oberfläche.

Das Polymerisat war in der Aufsicht kreidig weiß und wies eine Schüttdichte von ca. 370 g/l auf.

1b) Herstellung eines monodispersen, amidomethylierten Perlpolymerisates

Bei Raumtemperatur wurden 2373 g Dichlorethan, 705 g Phthalimid und 505 g 29,2 gew.-%iges Formalin vorgelegt. Der pH Wert der Suspension wurde mit Natronlauge auf 5,5 bis 6 eingestellt. Anschließend wurde das Wasser destillativ entfernt. Dann wurden 51,7 g Schwefelsäure zudosiert. Das entstehende Wasser wurde destillativ entfernt. Der Ansatz wurde abgekühlt. Bei 30°C wurden 189 g 65 %iges Oleum und anschließend 371,4 g monodisperses Perlpolymerisat aus Beispiel 1a) eindosiert. Die Suspension wurde auf 70°C erhitzt und weitere 6 Stunden bei dieser Temperatur gerührt. Die Reaktionsbrühe wurde abgezogen, entionisiertes Wasser wurde hinzudosiert und Restmengen an Dichlorethan wurden destillativ entfernt.

Ausbeute an amidomethyliertem Perlpolymerisat : 2140 ml

Elementaranalytische Zusammensetzung:

| | |
|---|---|
| Kohlenstoff: | 75,3 Gew. %; |
| Wasserstoff: | 4,9 Gew. %; |
| Stickstoff: | 5,8 Gew. %; |
| Rest: | Sauerstoff. |

1c) Herstellung eines monodispersen, aminomethylierten Perlpolymerisates

Zu 2100 ml amidomethyliertem Perlpolymerisat aus 1b) wurden 1019 g 45 gew.-%ige Natronlauge und 406 ml entionisiertes Wasser bei Raumtemperatur zudosiert. Die Suspension wurde auf 180°C erhitzt und 6 Stunden bei dieser Temperatur gerührt.

Das erhaltene Perlpolymerisat wurde mit entionisiertem Wasser gewaschen.

Ausbeute an aminomethyliertem Perlpolymerisat: 1770 ml

Als Gesamtausbeute über die Schritte 1b und 1c ergaben sich — hochgerechnet — 1804 ml Elementaranalytische Zusammensetzung: Stickstoff: 10,90 Gew. %

Trockengewicht: 0,27 g/ml Harz.

Menge an Aminomethylgruppen in mol pro Liter aminomethyliertem Perlpolymerisat: 2,29.

Aus der elementaranalytischen Zusammensetzung des aminomethylierten Perlpolymerisates lässt sich errechnen, dass im statistischen Mittel pro aromatischem Kern - herrührend aus den Styrol und Divinylbenzoleinheiten - 1,06 Wasserstoffatome durch Aminomethylgruppen substituiert wurden.

**Beispiel 2: Herstellung eines makroporösen, monodispersen, methylenaminoethylsulfonsäuregruppenhaltigen Chelatharz (erfindungsgemäß - Schritte d) und e) )**

1600 ml des wasserfeuchten, monodispersen, makroporösen aminomethylierten Harzes aus Beispiel 1 wurden zusammen mit 800 ml entionisertem Wasser und 1906,75 g einer 25 Gew.-%ige Lösung von Vinylsulfonsäurenatriumsalz vorgelegt, auf Rückfluss erhitzt und 67 Stunden auf Rückfluss gehalten.

Danach wurde die Suspension auf Raumtemperatur abgekühlt.

Das Harz wurde auf einem Sieb mit entionisertem Wasser gewaschen, in eine Säule umgefüllt, mit 14 Liter 4 Gew.-%iger Natronlauge eluiert und anschließend mit 42 Liter entionisiertem Wasser gewaschen.

Man erhielt 2570 ml eines wasserfeuchten, monodispersen, makroporösen, Chelatharzes mit Methylenaminomethylsulfonsäuregruppen. Das Harz wies ein Trockengewicht von 0,29 g per Milliliter Harz, einen Stickstoffgehalt von 5,9 Gew.-% und einen Schwefelgehalt von 11,6 Gew.-% auf.

**Beispiel 3: Herstellung eines makroporösen, monodispersen, methylenaminoethylsulfonsäuregruppenhaltigen Chelatharz (erfindungsgemäß — Schritte d) und e) )**

1600 ml eines wasserfeuchten, monodispersen, makroporösen aminomethylierten Harzes mit 2,29 mol Amin per Liter Harz, hergestellt analog Beispiel 1 wurden zusammen mit 800 ml entionisertem Wasser und 2288,1 g einer 25 Gew.-%ige Lösung von Vinylsulfonsäurenatriumsalz vorgelegt, auf Rückfluss erhitzt und 67 Stunden auf Rückfluss gehalten.

Danach wurde die Suspension auf Raumtemperatur abgekühlt.

Das Harz wurde auf einem Sieb mit entionisertem Wasser gewaschen, in eine Säule umgefüllt, mit 14 Liter 4 Gew.-%iger Natronlauge eluiert und anschließend mit 42 Liter entionisiertem Wasser gewaschen.

Man erhielt 2750 ml eines wasserfeuchten, monodispersen, makroporösen, Chelatharzes mit Methylenaminomethylsulfonsäuregruppen. Das Harz wies ein Trockengewicht von 0,30 g per Milliliter Harz, einen Stickstoffgehalt von 5,5 Gew.-% und einen Schwefelgehalt von 12,5 Gew.-% auf.

**Beispiel 4: Herstellung eines makroporösen, monodispersen, methylenaminoethylsulfonsäuregruppenhaltigen Chelatharz mit zusätzlichen Essigsäuregruppen (erfindungsgemäß — Schritte f) und g) )**

700 ml des wasserfeuchten, monodispersen, makroporösen methylenaminoethylsulfonsäuregruppenhaltigen Chelatharz aus Beispiel 2 wurden zusammen mit 737 ml entionisertem Wasser vorgelegt und auf 90 °C aufgeheizt.

Innerhalb 4 Stunden wurden dann bei 90 °C 177,4 g einer 80 gew.-%ige Lösung von Chloressigsäure zugegeben, wobei der pH-Wert während der gesamten Dosierzeit mittels Zugabe von 50 gew.-%ige Natronlauge bei einem Wert von 9,2 gehalten wurde.

Nach Ende der Dosierung wurde die Temperatur auf 95 °C angehoben und der pH-Wert mittels 50 Gew.-%iger natronlauge auf 10,5 gebracht. Es wurden noch 6 Stunden bei 95 °C gerührt.

Danach wurde die Suspension auf Raumtemperatur abgekühlt.

Das Harz wurde in eine Säule umgefüllt und mit 36 Liter entionisiertem Wasser gewaschen.

Man erhielt 850 ml eines wasserfeuchten, monodispersen, makroporösen, Chelatharzes mit Methylenaminomethylsulfonsäuregruppen und zusätzlichen Essigsäuregruppen. Das Harz wies ein Trockengewicht von 0,30 g per Milliliter Harz, einen Stickstoffgehalt von 4,6 Gew.-% und eine Totalkapazität von 1,51 Eq/l auf.

**Beispiel 5: Umsetzung eines makroporösen, monodispersen, aminomethylierten Harzes mit Vinylphosphonsäurenatriumsalz (nicht erfindungsgemäß)**

1200 ml eines wasserfeuchten, monodispersen, makroporösen aminomethylierten Harzes mit 2,29 mol Amin per Liter Harz, hergestellt analog Beispiel 1 wurden zusammen mit 600 ml entionisertem Wasser und 1451,2 g einer 35 Gew.-%ige Lösung von Vinylphosphonsäuremononatriumsalz vorgelegt, auf Rückfluss erhitzt und 48 Stunden auf Rückfluss gehalten.

Danach wurde die Suspension auf Raumtemperatur abgekühlt.

Das Harz wurde auf einem Sieb mit entionisertem Wasser gewaschen, in eine Säule umgefüllt, mit 8 Liter 4 Gew.-%iger Natronlauge eluiert und anschließend mit 40 Liter entionisiertem Wasser gewaschen.

Man erhielt 1385 ml eines wasserfeuchten, monodispersen, makroporösen, Harzes. Das Harz wies ein Trockengewicht von 0,26 g per Milliliter Harz, einen Stickstoffgehalt von 9,6 Gew.-% und einen Phosphorgehalt von 1,5 Gew.-% auf.

Der niedrige Phosphorgehalt weist einen niedrigen Umsetzungsgrad aus.

**Beispiel 6: Bestimmung der Kupferkapazität der Harze**

Jedes zur Untersuchung anstehende Harz wurde wie folgt behandelt:

50 ml Harz wurden in einer 250 ml Schraubdeckelflasche überführt. Das Harz wurde mit einem Siebrohr trockengesaugt und mit 200 ml einer Kupfersulfatlösung, hergestellt aus 100 g Kupfersulfat Pentahydrat in 1 Liter entionisiertem Wasser, beaufschlagt. Die dicht verschlossene Flasche wurde auf einer Schüttelmaschine 1 h bei 100 U/Min. geschüttelt.

Danach wurde der pH-Wert überprüft und ggf. mittels Zugabe von 25%iger Schwefelsäure auf einem Wert zwischen 3 und 4 justiert. Danach wurde die Flasche weitere 15 h bei 100 U/Min. geschüttelt. Nach dem Absetzen des Harzes wird eine Probe des Überstands zwecks Analyse entnommen.

Die Kupferkonzentration der eingesetzte Kupfersulfatlösung sowie des Überstandes am Ende des Testes werden mittels Atomadsorptionsspektroskopie bestimmt.

Aus der Differenz zwischen Kupfergehalt der Kupfersulfatlösung und Kupfergehalt des Überstands berechnet man die aufgenommene Kupfermenge pro Liter Harz. Diese aufgenommene Kupfermenge pro Liter Harz wird als Kupferkapazität des Harzes bezeichnet.

Die Ergebnisse der Messungen an einem erfindungsgemäßen Harz und einem kommerziell erhältlichen IDE-Chelatharz sind in Tabelle 1 aufgeführt:

Tabelle 1: Kupferkapazität der methylenaminoethylsulfonsäuregruppenhaltigen Chelatharze aus Beispielen 3 und 4

| Muster | Kupferkapazität (Eq/1) | Kupferkapazität (g/1) | % Aufnahme vom Angebot |
|---|---|---|---|
| **Beispiel 3** | **2,15** | **68,3** | **74** |
| **Lewatit Monoplus TP 208** | **2,03** | **64,4** | **57** |

Aus der Tabelle 1, Beispiel 3 ist ersichtlich, dass die erfindungsgemäßen Harze in saurer Lösung das Wertmetall Kupfer effektiv aufnehmen.

Der Vergleich von Beispiel 3 mit dem IDE-Harz Lewatit Monoplus TP 208 zeigt, dass die erfindungsgemäßen Harze bei niedrigem pH-Wert das Kupfer deutlich besser aufnehmen, als die kommerziell erhältliche Harze.

**Analytik**

**Bestimmung der Totalkapazität der Harze**

100 ml unter entionisertem Wasser eingerüttelter Chelatharz werden im Glasfilterrohr mit 750 ml 3 Gew.-%iger Salzsäure eluiert. Anschließend wird das Harz mit entionisertem Wasser solange aus, bis der Ablauf neutral und chloridfrei ist.

50 ml des in die sauren Form überführten Chelatharz werden nun im Glasfilterrohr mit Natronlauge 0,1 Mol/L mit 3 ml/Minute im Durchlauf beaufschlagt.

Den Ablauf fängt man jeweils in einem 250 ml-Messkolben auf und titriert die gesamte Menge gegen Methylorange mit Salzsäure 1 Mol/L. Es wird solange Natronlauge 0,1 mol/L aufgegeben, bis 250 ml Ablauf einen Verbrauch von 24,5 - 25 ml an Salzsäure 1 Mol/L haben. Die jeweils abgenommenen Mengen und die Titrationsergebnisse werden notiert.

Die Totalkapazität des Harzes wird mit folgender Formel berechnet:

$$\frac{(x \cdot 25 - V) - 3}{50} = \text{TK in meq/ml Chelatharz}$$

x = Zahl der Ablauffraktionen
V = Gesamtverbrauch in ml an Salzsäure 1 Mol/L bei der Titration der Abläufe
3 = Abzug für Restlauge im Austauscher

**Patentansprüche**

1. Chelatharze enthaltend Methylenaminoethylsulfonsäwegruppen der allgemeinen Formel (I),

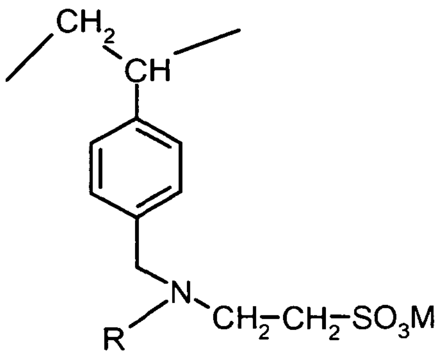

(I)

worin

R für einen Rest der Reihe-H, -$C_1$-$C_6$-Alkyl, -$CH_2$-COOM oder -$CH_2$-$CH_2$-$SO_3$M steht und
M für H oder für ein metallisches Kation, bevorzugt für ein Kation der Alkali-Metall-Reihe, insbesondere für Na+ oder K+, steht.

2. Chelatharze nach Anspruch 1, **dadurch gekennzeichnet, dass** diese eine monodisperse Teilchengrößenverteilung aufweisen.

3. Chelatharze nach Anspruch 2, **dadurch gekennzeichnet, dass** diese einen mittleren Teilchendurchmesser D zwischen 100 und 1200 μm aufweisen.

4. Chelatharze nach Anspruch 1, **dadurch gekennzeichnet, dass** diese eine makroporöse Struktur aufweisen.

5. Verfahren zur Herstellung von Chelatharzen enthaltend Methylenaminoethylsulfonsäuregruppen der allgemeinen Formel (I)

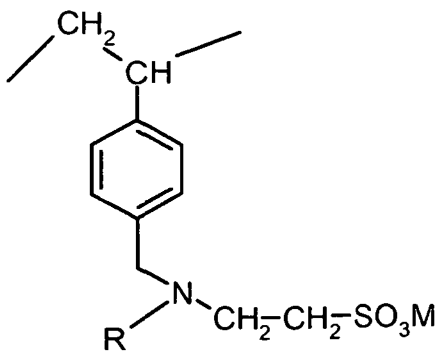

(I)

worin

R für einen Rest der Reihe-H, -$C_1$-$C_6$-Alkyl, -$CH_2$-COOM oder -$CH_2$-$CH_2$-$SO_3$M steht und
M für H oder für ein metallisches Kation, bevorzugt für ein Kation der Alkali-Metall-Reihe, insbesondere für Na+ oder K+, steht,

**dadurch gekennzeichnet, dass** man

a) ein monoethylenisch ungesättigtes aromatisches Monomer und eine multiethylenisch ungesättigte Verbindung zu einem Perlpolymerisat polymerisiert,
b) das Perlpolymerisat zu einem aminomethylierten Perlpolymerisat umsetzt,
c) das aminomethylierte Perlpolymerisat neutral wäscht,
d) das aminomethylierte Perlpolymerisat mit Vinylsulfonsäure umsetzt und
e) nach der Umsetzung das erhaltene Chelatharz enthaltend Methylenaminoethylsulfonsäuregruppen mit entionisertem Wasser bei Temperaturen von 20 bis 120°C wäscht und durch Absetzen lassen oder Filtrieren isoliert.

**6.** Verfahren zur Herstellung von Chelatharzen gemäß Anspruch 5, **dadurch gekennzeichnet, dass** die Vinylsulfonsäure als Alkalimetallsalz eingesetzt wird.

**7.** Verfahren zur Herstellung von Chelatharzen gemäß Anspruch 5, **dadurch gekennzeichnet, dass** die Polymerisation im Verfahrensschritt a) in Anwesenheit eines organischen Verdünnungsmittels als Porenbildner durchgeführt wird.

**8.** Verfahren zur Herstellung von Chelatharzen gemäß Anspruch 5, **dadurch gekennzeichnet, dass** zur Erzeugung einer monodispersen Teilchengrößenverteilung die Polymerisation in Schritt a) nach dem Saat-Zulauf-Verfahren oder dem Verdüsungsverfahren durchgeführt wird.

**9.** Verfahren zur Herstellung von Chelatharzen gemäß Anspruch 5, **dadurch gekennzeichnet, dass** man zusätzlich

f) das Schritt e) erhaltene Chelatharz mit einem Alkylierungsreagenz reagieren lässt und
g) nach der Umsetzung das erhaltene Chelatharz enthaltend Methylenaminoethylsulfonsäuregruppen mit entionisertem Wasser bei Temperaturen von 20 bis 120°C wäscht und durch Absetzen lassen oder Filtrieren isoliert.

**10.** Verwendung der Chelatharze gemäß Anspruch 1 zur selektiven Abtrennung von Schwermetallen oder Edelmetallen aus wässrigen Lösungen mit einem pH-Wert < 4.

**11.** Verwendung gemäß Anspruch 10, **dadurch gekennzeichnet, dass** die wässrigen Lösungen Prozesswässer in oder aus der Elektronikindustrie, der Galvanikindustrie oder der Mincnindustrie sind.

**Claims**

**1.** Chelating resins containing methyleneaminoethylsulfonic acid groups of the general formula (I)

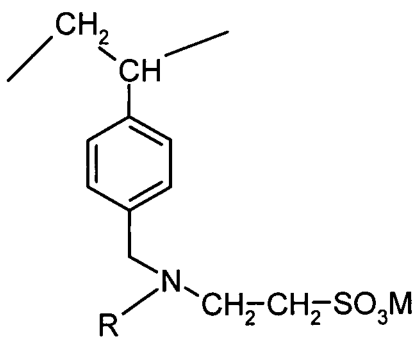

(I)

where

R is a radical from the group consisting of -H, $-C_1-C_6$-alkyl, $-CH_2-COOM$ or $-CH_2-CH_2-SO_3M$ and
M is H or a metallic cation, preferably a cation of the alkali metal group, in particular $Na^+$ or $K^+$.

**2.** Chelating resins according to Claim 1, **characterized in that** they have a monodisperse particle size distribution.

**3.** Chelating resins according to Claim 2, **characterized in that** they have an average particle diameter D in the range from 100 to 1200 μm.

**4.** Chelating resins according to Claim 1, **characterized in that** they have a macroporous structure.

**5.** Process for preparing chelating resins containing methyleneaminoethylsulfonic acid groups of the general formula (I)

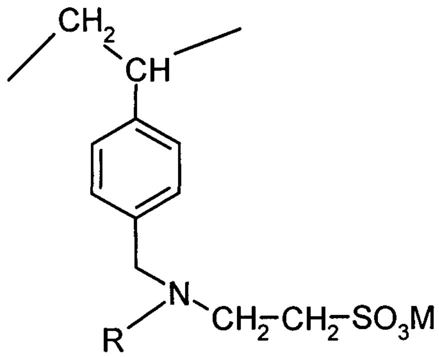

(I)

where

R is a radical from the group consisting of -H, -$C_1$-$C_6$-alkyl, -$CH_2$-COOM or -$CH_2$-$CH_2$-$SO_3$M and
M is H or a metallic cation, preferably a cation of the alkali metal group, in particular $Na^+$ or $K^+$,

**characterized in that**

a) a monoethylenically unsaturated aromatic monomer and a multiethylenically unsaturated compound are polymerized to give a bead polymer,
b) the bead polymer is converted into an aminomethylated bead polymer,
c) the aminomethylated bead polymer is washed until neutral,
d) the aminomethylated bead polymer is reacted with vinylsulfonic acid and
e) the chelating resin containing methyleneaminoethylsulfonic acid groups which is obtained after the reaction is washed with deionized water at temperatures of from 20 to 120°C and isolated by being allowed to settle or filtration.

**6.** Process for preparing chelating resins according to Claim 5, **characterized in that** the vinylsulfonic acid is used as alkali metal salt.

**7.** Process for preparing chelating resins according to Claim 5, **characterized in that** the polymerization in step a) is carried out in the presence of an organic diluent as pore former.

**8.** Process for preparing chelating resins according to Claim 5, **characterized in that** the polymerization in step a) is carried out by the seed feed process or the spraying process in order to produce a monodisperse particle size distribution.

**9.** Process for preparing chelating resins according to Claim 5, **characterized in that**, in addition,

f) the chelating resin obtained in step e) is allowed to react with an alkylating reagent and
g) the chelating resin containing methyleneaminoethylsulfonic acid groups obtained after the reaction is washed with deionized water at temperatures of from 20 to 120°C and isolated by being allowed to settle or filtration.

**10.** Use of the chelating resins according to Claim 1 for the selective separation of heavy metals or noble metals from aqueous solutions having a pH of < 4.

**11.** Use according to Claim 10, **characterized in that** the aqueous solutions are process water in or from the electronics industry, the electroplating industry or the mining industry.

## Revendications

**1.** Résines chélatées contenant des groupes acide méthylène-aminoéthylsulfonique de formule générale (I),

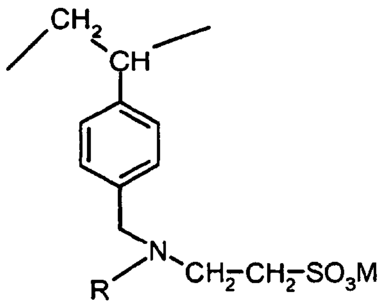

(I)

où

R représente un radical de la série -H, $-C_1-C_6$-alkyle, $-CH_2-COOM$ ou $-CH_2-CH_2-SO_3M$ et
M représente H ou un cation métallique, de préférence un cation de la série des métaux alcalins, en particulier $Na^+$ ou $K^+$.

**2.** Résines chélatées selon la revendication 1, **caractérisées en ce qu'**elles présentent une répartition monodispersée des grosseurs des particules.

**3.** Résines chélatées selon la revendication 2, **caractérisées en ce qu'**elles présentent un diamètre D moyen des particules entre 100 et 1200 µm.

**4.** Résines chélatées selon la revendication 1, **caractérisées en ce qu'**elles présentent une structure macroporeuse.

**5.** Procédé pour la préparation de résines chélatées contenant des groupes acide méthylène-aminoéthylsulfonique de formule générale (I),

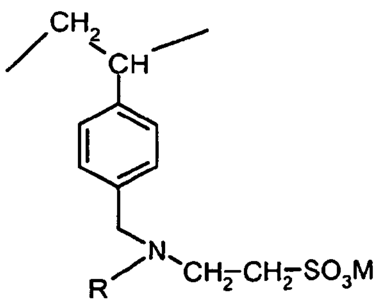

(I)

où

R représente un radical de la série -H, $-C_1-C_6$-alkyle, $-CH_2-COOM$ ou $-CH_2-CH_2-SO_3M$ et
M représente H ou un cation métallique, de préférence un cation de la série des métaux alcalins, en particulier $Na^+$ ou $K^+$.

**caractérisé en ce que**

a) on polymérise un monomère aromatique éthyléniquement monoinsaturé et un composé éthyléniquement polyinsaturé en un polymère en billes,
b) on transforme le polymère en billes en un polymère en billes aminométhylé,
c) on lave le polymère en billes aminométhylé jusqu'à la neutralité,
d) on transforme le polymère en billes aminométhylé avec de l'acide vinylsulfonique et

e) après la transformation, on lave la résine chélatée obtenue contenant des groupes acide méthylène-aminoéthylsulfonique avec de l'eau désionisée à des températures de 20 à 120°C et on l'isole par décantation ou filtration.

**6.** Procédé pour la préparation de résines chélatées selon la revendication 5, **caractérisé en ce qu'**on utilise l'acide vinylsulfonique sous forme de sel de métal alcalin.

**7.** Procédé pour la préparation de résines chélatées selon la revendication 5, **caractérisé en ce que** la polymérisation dans l'étape de procédé a) est réalisée en présence d'un diluant organique comme agent porogène.

**8.** Procédé pour la préparation de résines chélatées selon la revendication 5, **caractérisé en ce que**, pour la production d'une répartition monodispersée de grosseurs de particules, la polymérisation dans l'étape a) est réalisée selon le procédé d'alimentation de semence ou le procédé de vaporisation.

**9.** Procédé pour la préparation de résines chélatées selon la revendication 5, **caractérisé en ce qu'**en outre

f) on laisse réagir la résine chélatée obtenue dans l'étape e) avec un réactif d'alkylation et
g) après la transformation, on lave la résine chélatée obtenue contenant des groupes acide méthylène-aminoéthylsulfonique avec de l'eau désionisée à des températures de 20 à 120°C et on l'isole par décantation ou filtration.

**10.** Utilisation des résines chélatées selon la revendication 1 pour la séparation sélective de métaux lourds ou de métaux nobles de solutions aqueuses présentant un pH < 4.

**11.** Utilisation selon la revendication 10, **caractérisée en ce que** les solutions aqueuses sont des eaux de procédé dans ou provenant de l'industrie électronique, l'industrie de galvanisation ou l'industrie minière.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1078690 A
- US 4444961 A
- US 4098867 A
- US 4031038 A
- EP 0046535 A
- EP 0617714 A
- DD 79152
- IL 52121
- US 4952608 A
- WO DAS2519244 A


### In der Beschreibung aufgeführte Nicht-Patentliteratur


- **R. HERING.** Chelatbildende Ionentauscher. Akademie Verlag, 1967, 150-157
- **K. HORIE et al.** *Pure and Applied Chemistry,* 2004, vol. 76 (4), 900